# EUROPEAN PATENT SPECIFICATION

(11) **EP 3 451 588 B1**
(45) Date of publication and mention of the grant of the patent: **22.04.2020**
(21) Application number: 17306113.6
(22) Date of filing: 30.08.2017
(51) Int. Cl.: H04L 12/26, H04L 12/715

(54) **A NETWORK ENTITY FOR PROVIDING AN AGGREGATED BIT RATE PACKET STREAM**
NETZWERKEINHEIT ZUR BEREITSTELLUNG EINES AGGREGIERTEN BITRATENPAKETSTROMS
ENTITÉ DE RÉSEAU POUR FOURNIR UN FLUX DE PAQUETS À DÉBIT BINAIRE AGRÉGÉ

(43) Date of publication of application: 06.03.2019
(73) Proprietor: Nokia Solutions and Networks Oy, 02610 Espoo (FI)
(72) Inventor: BUI, Dinh Thai, 91620 Nozay (FR); DOUVILLE, Richard, 91620 Nozay (FR)
(74) Representative: Loyer & Abello

(56) References cited:
- US-A1- 2016 248 656
- CHI PO-WEN ET AL: "SDNort: A Software Defined Network Testing Framework Using Openflow", 2016 11TH ASIA JOINT CONFERENCE ON INFORMATION SECURITY (ASIAJCIS), IEEE, 4 August 2016 (2016-08-04), pages 100-107, XP033023349, DOI: 10.1109/ASIAJCIS.2016.12 [retrieved on 2016-12-12]

## Description

### Field of the invention

The invention relates to the technical field of generating aggregated bit rate packet stream in a software-defined networks (SDN), especially in packet-switched networks including IP and all flavors of MPLS communication systems.

### Background

Transfer rates of 100 Gbit/s are becoming widely adopted, while vendors are under pressure to introduce even faster network equipments with the expectations of reaching 400 Gbit/s. In this context, tools for traffic generation are essential to quantitative and qualitative evaluations of network equipment performance, e.g. evaluating that a Network Interface Card (NIC) and its associated driver can support the line capacity traffics without any packet loss, verifying that the Quality of Service (QoS) mechanisms work correctly in load condition, etc.

However, tools for traffic generation at high-speed bit rate, e.g. 100 Gbit/s, are often hardware-based. These are expensive and not very flexible (for example in a fast deployment on an operational network).

One of the primary metrics of a network equipment performance is the number of packets per second (pps) supported by the network equipment without losing or dropping packets. In order to reach 100 Gbit/s, a traffic generator should transmit 8.13 millions of packets per second (Mpps) with 1500-byte packets. The figure rises upto 148.8 Mpps with minimum-sized (64 byte) packet (thus a packet emitted every 6.7 ns). This cannot be realized by now using a software-based implementation.

The published article "SDNort: a software Defined Network Testing Frame work Using Openflow" written by CHI PO-WEN et Al., 2016, 11th Asia Joint Conference on Information Security, discloses how to transform a switch into a a device for testing another switch. In this document the switch used as testing equipment is normally capable to generate the traffic for the test at the maximum bandwidth and a loop is made for repeating infinitely the transmitted message.

### Summary

The present invention is defined by the independent claims, to which reference should now be made. Specific embodiments are defined by the dependent claims.

An idea at the basis of the invention is to provide a software packet stream generator generating a high bit rate in order to evaluate a network element dedicated to data stream having high bit rates. Aspects of the invention are based on the idea of using the openness of an SDN-capable network element which allows a SDN controller 2 to directly provision the forwarding table of the SDN-capable Network Element.

In an embodiment, the invention provides a network entity for providing an aggregated bit rate packet stream in a network element under supervision in a software defined network (SDN), the network entity being destined to be connected to a first network element, the network entity comprising:
a packet stream generator configured to
   - generate a stream of packets having a generating bit rate,
   - send the stream of packets to the first network element,
a software network controller configured to,
   - configure the first network element to iteratively pass the stream of packets to a second network element,
the second network element being configured to loop back the stream of packets to the first network element, until a packet of the stream of packets has been looped a determined number N of times from the first network element to the second network element.

Thank to these features, a network element under supervision having a high bit rate may be evaluated or partially/fully loaded without high bit rate hardware generator. For example, the network may be partially or fully loaded in order to perform some tests under traffic load conditions. The phrase "high bit rate" is understood as a bit rate higher than 50Gbit/s, for example equal to 100Gbit/s. The generating bit rate is comprised between 100Mbit/s and 10Gbit/s. For example, the generating bit rate is equal to 1Gbit/s.

In embodiments, the network entity may comprise one or more of the following features.

In an embodiment, the network element is a Label-Switched Router or Label Edge Router (LER) of an MPLS network, wherein the Ping or Traceroute application message comprises an MPLS Ping message or an MPLS Traceroute message. Accordingly, the method may comprise the step of sending the MPLS Ping message or the MPLS Traceroute message from a second Label-Switched Router or Label Edge Router of the an MPLS network.

In an embodiment, the packet stream generator is a software-based traffic generator.]

In an embodiment the network entity further comprises:
a packet stream monitor configured to receive streams of packets from the first network element or respectively the second network element, wherein the software network controller is further configured to
- as a response to determining that a packet of the stream of packets has been looped a determined number N of times from the first network element to the second network element, configure the first network element or respectively the second network element to pass the packet of the stream of packets to the packet stream monitor.

In an embodiment the software network controller is further configured to:
- determine a monitoring bit rate, wherein the monitoring bit rate is the bit rate of the stream of packets received by the packet stream monitor,
- compare the monitoring bit rate to the generating bit rate.

In an embodiment, the software network controller is further configured to, as a response to determining that the monitoring bit rate is equal to the generating bit rate, generating a qualification label for the network element under supervision, wherein the qualification label states that the network element under supervision has an assumed high speed bit rate.

In an embodiment the first network element is an upstream packet switch, the second network element is a downstream packet switch connected to the upstream packet switch by a network link or a network, wherein the network element under supervision is the network link or the network, wherein the stream of packets is passed through the network link or the network the determined number N of times.

The network link under supervision may be various. For example, the network link may be a virtual link or a physical link. A virtual link designates an abstraction defined in the network for the purpose of traffic engineering. It may or may not correspond to a physical link. It may also correspond to a bundle of physical links. Examples of virtual links include Virtual LANs (VLAN), Label-Switched Paths (LSP) in all flavors of MPLS, Tandem connections in MPLS-TP OAM, IP-Sec (IETF RFC 4303) tunnels, GRE (IETF RFC 2784) tunnels and others.

The second network element may be configured to pass back the stream of packets to the first network element in various means. In an embodiment, the second network element is a function configured to automatically loopback any traffic. Namely, in an embodiment, the second network element is a high-speed loopback plug connected to a port of the upstream packet switch, wherein the high-speed loopback plug is configured to loop back a packet stream received from a port of the upstream packet switch to the port of the upstream packet switch, wherein the network element under supervision is the upstream packet switch.

Alternatively, the second network element may be any kind of SDN-capable network element which is configured by the SDN controller monitoring. Namely, in an embodiment, the software network controller is further connected to the second network element, and wherein the software network controller is further configured to control the second network element in order that the second network element is configured to pass back the stream of packets to the first network element, until a packet of the stream of packets has been passed a determined number N of times from the first network element to the second network element.

In an embodiment, the software network controller is further configured to, prior to control the first network element to pass the stream of packets to the second network element, control the first network element to set a loop counter in header tags of the packets of the stream of packets.

In an embodiment, the loop counter comprises a triggering limit, which is a function of the number N.

In an embodiment, the function is equal to N and the loop counter is an incrementing counter configured to stop at the triggering limit. In another embodiment, the function is equal to N and the loop counter is a decrementing counter configured to start at the triggering limit and to stop at zero.

In an embodiment the software network controller is further configured to control the first network element to replicate the packet stream into a replicated packet stream, and to send the replicated packet stream to the network element under supervision.

The invention also provides a method according to claim 10, the method comprising:
- generating by a network entity a stream of packets having a generating bit rate,
- sending by the network entity the stream of packets to a first network element, configuring by the network entity the first network element to iteratively pass the stream of packets to a second network element,
the second network element being configured to loop back the stream of packets to the first network element, until a packet of the stream of packets has been looped a determined number N of times from the first network element to the second network element.

In embodiments, the method may father comprise one or more of the following features.

In an embodiment, the method further comprises:
- receiving streams of packets from the first network element or respectively the second network element, and
- as a response to determining that a packet of the stream of packets has been looped a determined number N of times from the first network element to the second network element, passing the packet of the stream of packets to the packet stream monitor.

In an embodiment, the method further comprises:
- determining a monitoring bit rate, wherein the monitoring bit rate is the bit rate of the stream of packets received by the packet stream monitor,
- comparing the monitoring bit rate to the generating bit rate.

In an embodiment, the method further comprises:
- passing back the stream of packets to the first network element, until a packet of the stream of packets has been passed a determined number N of times from the first network element to the second network element.

In an embodiment, the method further comprises:
- setting a loop counter in header tags of the packets of the stream of packets.

In an embodiment, the method further comprises:
- replicating the packet stream into a replicated packet stream, and to send the replicated packet stream to the network element under supervision.

### Brief description of the drawings

These and other aspects of the invention will be apparent from and elucidated with reference to the embodiments described hereinafter, by way of example, with reference to the drawings.
Figure 1 is a functional representation of a network entity connected to a network under supervision, according to a first embodiment.
Figure 2 is a functional representation of a network entity according to a second embodiment.
Figure 3 is a functional representation of a network entity connected to a network under supervision, according to a third embodiment.

### Detailed description of the embodiments

With reference to the Figures, a network entity 1 is represented.

The network entity 1 comprises a software-defined network (SDN) controller 2, a packet stream generator 3 and a packet stream monitor 8.

The packet stream generator 3 is configured to generate streams of packets having a generating bit rate. The generating bit rate is a low bit rate.

The SDN controller 2 is connected to a first network element and a second network element. The connections between the SDN controller 2 and the first network element and second network element are controlling connections 4 and 5.

The SDN controller 2 is configured to control the first network element and the second network element. Namely, the SDN controller 2 is configured to set up forwarding tables in the first and second network elements.

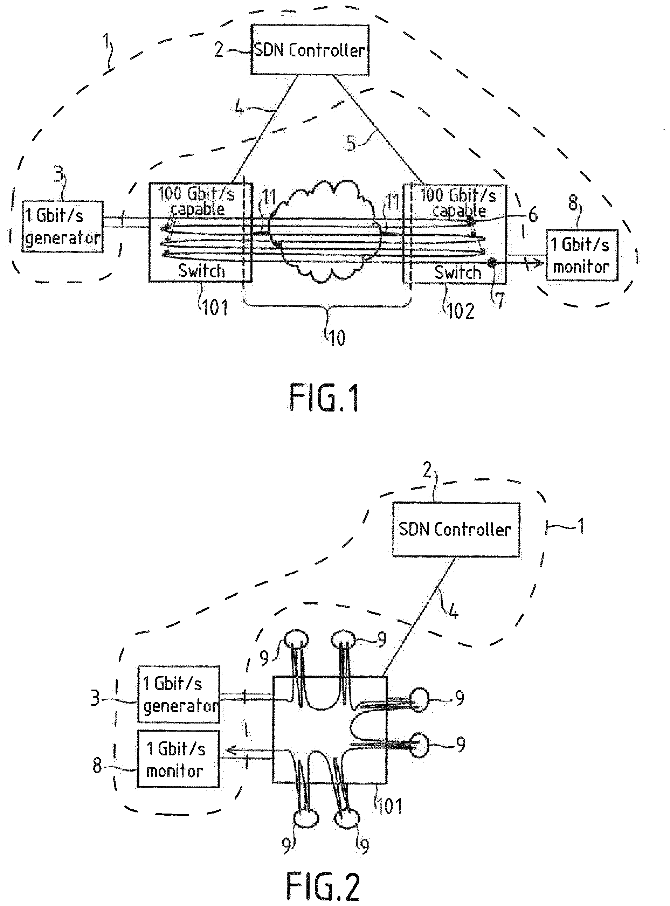

With reference to **Figure 1****,** the network entity 1 is connected to a packet-switched network 10 which could be as a particular case reduced to a network link 11 and the associated network interfaces, the one within packet switch 101 and one within packet switch 102. The network entity 1 is further connected to the first network element, which is an upstream packet switch 101, and to the second network element, which is a downstream packet switch 102.

The SDN controller 2 is configured to control the upstream packet switch 101 and the downstream packet switch 102. Namely, the SDN controller 2 is configured to set up forwarding tables in the upstream packet switch 101 and the downstream packet switch 102.

Both the upstream packet switch 101 and the downstream packet switch 102 can support up to a minimum common rate capacity (e.g. equal to 100Gbit/s). As represented, the upstream packet switch 101 and the downstream packet switch 102 connect each other through the packet-switched network 10. Namely, the upstream packet switch 101 and the downstream packet switch 102 are configured to pass each other packet streams through a high bit rate network link 11 or a packet-switched network 10.

The packet-switched network 10 is supposed to have an assumed bit rate. The packet-switched network 10 has a tested bit rate. In the example of the figure 1, the assumed bit rate is equal to 100 Gbit/s.

In a quantitative approach, the network entity 1 can be configured to evaluate if the tested bit rate is indeed equal to the assumed bit rate.

In a qualitative approach, the network entity 1 can be configured to load the packet-switched network 10 at an estimated threshold (e.g. 50% load).

To achieve both quantitative and qualitative approaches, the packet stream generator 3 is configured to send a stream of packets having the generating bit rate to the upstream packet switch 101. For example, the generating bit rate in the packet stream generator 3 is configured by controlling of the SDN controller 2 through a controlling link between the SDN controller 2 and the packet stream generator 3. In the example of Figure 1, the generating bit rate is equal to 1Gbit/s.

The upstream packet switch 101 is configured to pass the stream of packets to the downstream packet switch 102, and the downstream packet switch 102 is configured to pass the stream of packets to the upstream packet switch 101 in order that each packet of the stream of packet performs a number N of loops between the upstream packet switch 101 and the downstream packet switch 102.

Determining if the received packet has performed the number N of loops may be performed in various means.

In a first example, the SDN controller 2 can implement an internal loop Counter which is incremented each time the packet stream is looped back at the downstream packet switch 102. The SDN controller 2 then sets up the downstream packet switch 102 for forwarding the packet stream to the packet stream monitor 8 when the counter reaches a parameterized maximum value. In a preferred embodiment further described below, a tag may inserted into the packet by the downstream packet switch 102 so that the upstream packet switch 101 can differentiate between different loops.

In a second example, the downstream packet switch 102 is set up by the SDN controller 2 in order to insert a loopback tag in the header of each packet of the stream of packets.

The presence of a loopback tag in the header of a packet of the stream of packet is symbolized on Figure 1 by a dot 6.

The loopback tag may be a Virtual Local Area Network (VLAN) tag, or a MultiProtocol Label Switching (MPLS) label or the Time-to-Live (TTL) field associated to the IP header (resp. MPLS label), or any customized header which format is supported by the SDN controller 2 and both the upstream packet switch 101 and the downstream packet switch 102.

The tag should be inserted after the last VLAN tag or the last MPLS label which is taken into account by the Network Element Quality of Service (QoS) classifier in order to maintain the same QoS treatment for the packets whose header is modified by adding the tag compared to the packets whose header is unchanged.

The downstream packet switch 102 is set up by the SDN controller 2 in order to send back a received packet from the packet stream to the upstream packet switch 101 as a response to detecting a loopback tag in the header of the received packet The SDN controller 2 is further configured to insert and modify the loopback tag in the header of the received packet so that packet switch 101 can differentiate between different looped traffics.

The upstream packet switch 101 is set up by the SDN controller 2 in order to send back a received packet from the packet stream to the downstream packet switch 102 as a response to detecting a loopback tag in the header of the received packet.

Therefore each packet of the stream of packets passes iteratively through the packet-switch network 10 in a loop between the upstream packet switch 101 and the downstream packet switch 102.

In order to avoid that a packet of the stream of packet circulates in an infinite loop between the upstream packet switch 101 and the downstream packet switch 102, the loopback tag comprises a defined number N of loops. The downstream packet switch 102 is configured by the SDN controller 2 to suppress the loopback tag from the header of a received packet which has performed the defined number N of loops.

The suppression of the loopback tag from the header of a received packet is represented on Figure 1 by a dot 7.

The loopback tag may comprise a counter which is incremented at each loop until reaching a parameterized maximum value. Alternatively, the counter may be decremented at each loop until reaching a predefined minimum value (e.g. zero or one in the case where the TTL flied is used).

In a third example, the packet stream generator 3 can insert the loopback tag which contains a parameter initially set to the total number N of loops to be performed. The SDN controller 2 inserts a rule at the downstream packet switch 102 in order to configure the downstream packet switch 102 to decrease by one value the parameter at each loop back. The SDN controller 2 is further configured to insert a rule in the downstream packet switch 102 in order to configure the downstream packet switch 102 to suppress the loopback tag and to forward the packet stream to the packet stream monitor 8, as a response to detecting that the parameter of the loopback tag is equal to 0 (resp. 1 - in case of using TTL field).

Another method of stopping the loop process may be used as well instead of defining a defined number N of loops. In such a method, the packet stream monitor 8 detects that the monitored stream bit rate becomes lower than the generating bit rate by comparison to a certain configured threshold. This means than the network 10 is fully loaded. The idea here is not to measure network 10 assumed bit rate but to fully load this network for some under-load tests for instance.

In such an embodiment, the three components: SDN controller 2, packet stream generator 3 and packet stream monitor 8 should be synchronized thanks to synchronizing links connecting each other (not represented). In the case the aim is to ensure that the packet-switched network 10 is fully loaded, then the number N of loops is determined in order that the ratio between the assumed bit rate and the generating bit rate is equal or slightly lower to N+1.

In other cases, the operator can decide to load the network at a defined percentage, for example 50%, of its capacity for testing the packet-switched network under defined load conditions.

In the example of the figure 1, the assumed bit rate is equal to 100Gbit/s, the generating bit rate is equal to 1Gbit/s and therefore the number of loops N is equal to 99.

Thanks to the loops performed by packets of the packet stream received from the packet stream generator 3, N+1 packet substreams of the packets stream, which are generated at different successive generating time instants, are simultaneously circulating on a same path of the packet-switch network 10. Therefore, the loops of the packets acts as an aggregation of the N+1 packet substreams, which results into an aggregation bit rate of the aggregation of the packet substreams.

If the packet-switch network 10 has indeed the assumed bit rate, then the aggregation bit rate is the sum of bit rates of packet substreams. Each packet substream having the generating bit rate, the aggregation of the packets substreams has an aggregation bit rate equal to the generating bit rate multiplied by the number N+1.

By contrast, if the packet-switch network 10 has a tested bit rate which is lower than the assumed bit rate, the aggregation of the packets substreams is clipped in the packet-switch network 10 and therefore the packets substreams are also clipped.

The downstream packet switch 102 is further configured by the SDN controller 2 to send a packet which has no loopback tag in the header anymore to a packet stream monitor 8.

The packet stream monitor 8 receives a stream of packets whose header has been suppressed.

The stream of packets whose header has been suppressed corresponds to the stream of packets initially sent by the upstream packet switch 101 if the packet-switch network 10 has indeed the assumed bit rate. Otherwise, the stream of packets has been clipped, as explained above.

The packet stream monitor 8 has a minimum bit rate capacity equal to the generating bit rate.

The SDN controller 2 is configured to determine a monitoring bit rate, which is the bit rate of the stream of packets received by the packet stream monitor 8.

The SDN controller 2 determines that the tested bit rate of the packet-switch network 10 is equal to the assumed bit rate of the packet-switch network 10 as a response to determining that the monitoring bit rate is equal to the generating bit rate.

In the example of the Figure 1, the generating bit rate is equal to 1Gbit/s, therefore the packet-switch network 10 under supervision of the network entity 1 is determined to have the capacity to support the assumed bit rate if the monitoring bit rate is equal to 1Gbit/s.

**Figure 2** illustrates a second use of the network entity 1 of Figure 1.

The network entity 1 is connected to a first network element, which is in the example of Figure 2 an upstream packet switch 101.

The SDN controller 2 is configured to monitor the upstream packet switch 101, as represented by a controlling connection 4.

The upstream packet switch 101 has a tested switching bit rate. In the example of the figure 2, the assumed switching bit rate is equal to 100Gbit/s.

The network entity 1 is configured to evaluate if the tested switching bit rate is indeed equal to the assumed switching bit rate.

The upstream packet switch 101 is connected to a plurality of second network elements, which are high-speed loopback plugs 9, each being connected to a port of the upstream packet switch 101, as represented.

A high-speed loopback plug is a network element adapted to be plugged on a port of another network element. The high-speed loopback plug is configured to receive a packet stream from the port and to send it back to the port. The high-speed loopback plug can support packet streams having high bit rate. On the example of Figure 2, the high bit rate capacity of the high-speed loopback plugs 9 is equal to 100Gbit/s.

With reference again to Figure 2, the control of the upstream packet switch 101 by the SDN controller 2 for evaluating if the tested switching bit rate is equal to the assumed switching bit rate is further described.

The SDN controller 2 is configured to control the upstream packet switch 101 for, as a response to receiving a packet stream from the packet stream generator 3, sending the packet stream to a first high-speed loopback plug 9 through a first port of the upstream packet switch 101.

The SDN controller 2 is further configured to control the upstream packet switch 101 for, as a response to receiving a packet stream from a i^{th} high-speed loopback plug 9, sending the packet stream either to a i^{th} or to a i+1^{th} high-speed loopback plug 9 through a i^{th} or i+1^{th} port of the upstream packet switch 101, wherein "i" denotes for an index of the high-speed loopback plug 9 of the plurality of high-speed loopback plugs 9 of the upstream packet switch 101.

Therefore a packet of the packet stream is looped N times from the upstream packet switch 101 to one of the high-speed loopback plugs 9.

The SDN controller 2 is further configured to control the upstream packet switch 101 for, as a response to receiving a packet of the packet stream having performed N loops, send the packet to the packet stream monitor 8.

Determining if the received packet has performed the number N of loops may be performed in various means previously described with reference to Figure 1 (i.e. using loopback tags).

Thanks to the loops performed by the packets of the stream of packets received from the packet stream generator 3, N+1 packets substreams of the stream of packets, which are generated at different successive generating time instants, are simultaneously switched by the upstream packet switch 101.

If the upstream packet switch 101 has indeed the assumed switching bit rate, then an aggregation bit rate is the sum of the switching bit rates of the packets substreams, otherwise the aggregation bit rate is lower than the sum of the switching bit rates because of the packet stream being clipped.

In a same manner as described with reference to Figure 1, the SDN controller 2 is configured to determine that the monitoring bit rate is equal to the generating bit rate, and to deduce that the upstream packet switch 101 has the assumed switching bit rate or not.

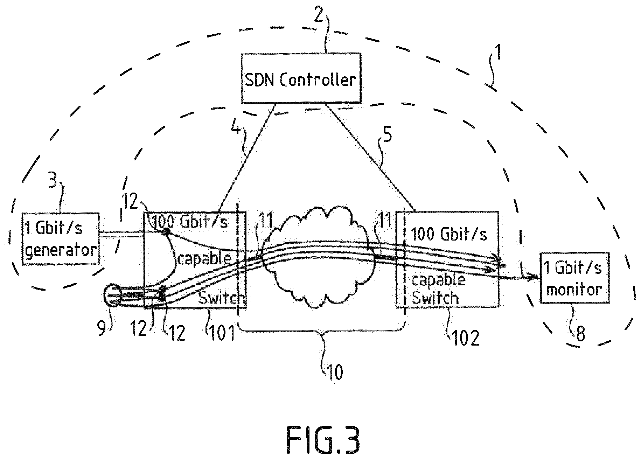

Figure 3 illustrates a third use of the network entity 1 of Figure 1, in which the first network element is the upstream packet switch 101, the second network element is the high-speed loopback plug 9 and the network element under supervision is a the packet-switch network 10.

The Figure 3 differs from the Figure 1 in that the upstream packet switch 101 is connected to a high-speed loopback plug 9 at one port.

By contrast with Figures 1 and 2, the SDN controller 2 is configured to monitor the upstream packet switch 101 for replicating the packet stream received from the packet stream generator 3. The replicating is symbolized on Figure 3 by a dot 12.

The SDN controller 2 is further configured to configure the upstream packet switch 101 for sending the replication of the packet stream to the high-speed loopback plug 9, and for sending the replicated packet stream to the downstream packet switch 102.

The SDN controller 2 is further configured to configure the upstream packet switch 101 for iteratively, as a response to receiving a replication of the packet stream from the high-speed loopback plug 9, replicating the replication of the packet stream. The SDN controller 2 is further configured to monitor the upstream packet switch 101 for sending the replication of the replication of the packet stream to the high-speed loopback plug 9 and the replicated replication of the packet stream to the downstream packet switch 102.

The SDN controller 2 is further configured to configure the upstream packet switch 101 for stopping replicating the packet stream after a packet has performed a number N of loops between the upstream packet switch 101 and the high-speed loopback plug 9. Determining that a packet has performed a number N of loops may be performed in one of the various manners described with reference to Figure 1 (i.e. using loopback tags).

With reference to the embodiment of Figure 3, the assumed bit rate of the packet-switch network 10 is a single direction assumed bit-rate, by contrast with the embodiment of Figure 1 wherein the assumed bit rate of the packet-switch network 10 is a bidirectional assumed bit rate.

Evaluating that the assumed bit rate of the packet-switch network 10 is equal or not to the tested bit rate of the packet-switch network 10 is performed similarly to the evaluating described with reference to Figure 1.

The evaluation of assumed bit rate of the packet-switch network 10 can be realized in both directions by implementing a same monitoring of the downstream packet switch 102 as in the upstream packet switch 101, and equipping the downstream packet switch 102 with a high-speed loopback plug 9. In this case, a loopback counter for each direction could be implemented as a separate counter, e.g. by insertion of an additional MPLS label. Alternatively, one could use the same counter.

In each previous described embodiment, coordination between the packet stream generator 3, packet stream monitor 8 and the SDN controller 2 may be implemented in different ways.

For example, the packet stream generator 3 can initialize the number of total loops that the SDN controller 2 should perform by, for instance, inserting a VLAN tag with the total number of loops.

Alternatively, the packet stream generator 3 does not inform the SDN controller 2 of the total number of loops, but the SDN controller 2 will loop the packet stream until reaching the tested bit rate of the network element under supervision. For this purpose, the packet stream monitor 8 can beforehand take measure of a reference bit rate of a reference packet stream generated by the packet stream generator 3, without performing any loop for the reference packet stream. Then, the packet stream monitor 8 can trigger the SDN controller 2 to stop performing loopback actions any further when the tested bit rate of a packet stream which has performed loopback actions starts being less than the reference bit rate. This means that the total tested bit rate has just reached the bit rate capacity of the network element under supervision.

In these cases, the SDN controller 2 can implement communication interfaces in order to communicate and coordinate loopback actions with the respective packet stream generator 3 and packet stream monitor 8.

In each previous described embodiment, OpenFlow rules or rules in any SDN alternative language, such as for example P4, can be inserted by the SDN controller 2 on the forwarding tables of the first and second network elements in order to realize the loopbacks. In the example of Figure 1 the first element is the upstream packet switch 101 and the second element is the downstream packet switch 102.

The loopback tag may be supported by various formats which are compatibles with SDN networks. In the following, examples are described in which the loopback tag are in Openflow languages, and wherein the first network element and second network element are configured by the SDN controller 2 to obey Openflow rules.

For the sake of illustration, in the following, OpenFlow rules are described using Open vSwitch format.
- On the first network element 101, the following rules can be inserted into forwarding tables:
   priority=1, in_port=2, actions=in_port
   priority=1, in_port=1, actions=push_vlan:99, output:2
   wherein "port = 2" refers to the port of the first network element 101 under supervision which is connected to the second network element 102 and "port = 1" refers to the port of the first network element 101 connected to the packet stream generator 3.
- On the second network element 102, the following rules can be inserted into forwarding tables:
   priority=1, vlan_tci=0, in_port=2, actions=strip_vlan,output:1
   priority=0, in_port=2, vlan_tci=N, actions= mod_vlan_vid:N-1, in_port
   wherein "port = 2" refers to the port of the second network element 102 under supervision which is connected to the first network element 101 and "port = 1" refers to the port of the second network element 102 connected to the packet stream monitor 8.

Alternatively, the last Openflow rule may not use a variable N, but instead should be replicated as many times as needed with a fix value of N, each inserted in a loopback tag at each loop.

Example of such successive replicated Openflow rules are stated below:
priority=0, in_port=2, vlan_tci=99, actions= mod_vlan_vid:98, in_port
priority=0, in_port=2, vlan_tci=98, actions= mod_vlan_vid:97, in_port etc

While the above examples are implemented using VLAN tags, the forwarding rules can be implemented in very much the same way using MPLS labels, e. g. with actions such as pop_mpls, push_mpls etc.

Alternatively, one can use MPLS TTL field (8 bits - from 0 to 255) (resp. 8-bit IP TTL field) if the number of loops is under 255. Also, we avoid the TTL from reach 0 in which case, the packets risk to be dropped by the Network Element. A new MPLS label is inserted as described previously. But, instead of decreasing/increasing the MPLS label value, the Network Element is programmed to decrease the TTL value at the Outgoing NE before each loopback action. In this case, the previous rules can be written as followings:
- In the first network element 101:
   priority=1, in_port=2, actions=in_port
   priority=1,in_port=1,actions=push_mpls:0x8847,set_mpls_ttl:100, output:2
- In the second network element 102, the following rules can be inserted into forwarding tables:
   priority= 1, mpls_ttl=1, in_port=2, actions=pop_mpls, output:1
   priority=0, in port =2, actions= dec_mpls_ttl, in_port
   wherein "port = 2" refers to the port of the second network element 102 under supervision which is connected to the first network element 101 and "port = 1" refers to the port of the second network element 102 connected to the packet stream monitor 8.

In all previous described embodiments, one can take advantages of existing neighbor network elements of the upstream packet switch 101. In this case, a loopback plug 9 as represented on Figure 2 or on Figure 3 can be replaced by a neighbor network element of the upstream packet switch 101. The traffic is then looped forth and back via the neighbor network element instead of the loopback plug 9.

One of the advantages of the above described embodiments is to allow testing the tested bit rate of a network element under supervision using a low bit rate packet stream generator 3 instead of using a costly and hard to move hardware high bit rate packet stream generator.

The number of network links shown is purely illustrative and not limitative.

The packet-switched network 10 is a SDN network and may include one or more domains. The data plane technology can be of any type that can be currently supported by SDN technology (e.g. MPLS, IP, Ethernet, etc) or will be supported by SDN technology in the future (e.g. all-optical, WDM, SONET, SDH, and others).

The three components: SDN controller 2, packet stream generator 3 or packet stream monitor 8 are presented above as implemented as separated modules. In general, the three components: SDN controller 2, packet stream generator 3 or packet stream monitor 8 could as well be collocated in the same appliance (e.g. the SDN controller and the generator can be part of the same deployed Virtual Network Function (cf. ETSI VNF), or for example, the SDN controller 2 may be a function included in the packet stream generator 3 or in the packet stream monitor 8. The three components: SDN controller 2, packet stream generator 3 or packet stream monitor 8 may also be implemented in a unitary manner.

Elements such as the processing means could be e.g. hardware means like e.g. an ASIC, or a combination of hardware and software means, e.g. an ASIC and an FPGA, or at least one microprocessor and at least one memory with software modules located therein.

The invention is not limited to the described embodiments. Namely, the upstream packet switch 101 and the downstream packet switch 102 may be similar and both configured to loop traffics while inserting/modifying/suppressing loopback tags.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A network entity (1) for providing an aggregated bit rate packet stream in a network element under supervision (11, 101) in a software defined network, SDN, the network entity (1) being destined to be connected to a first network element (101), the network entity (1) comprising:
a packet stream generator (3) configured to
- generate a stream of packets having a generating bit rate,
- send the stream of packets to the first network element (101),
a software network controller (2) configured to,
- configure the first network element (101) to *iteratively* pass the stream of packets to a second network element,
the second network element (9, 102) being configured to loop back the stream of packets to the first network element (101), until a packet of the stream of packets has been looped a determined number N of times from the first network element (101) to the second network element (9, 102).

2. The network entity (1) according to claim 1, wherein the network entity further comprises:
a packet stream monitor (8) configured to receive streams of packets from the first network element (101) or respectively the second network element (9, 102), wherein the software network controller (2) is further configured to
- as a response to determining that a packet of the stream of packets has been looped a determined number N of times from the first network element (101) to the second network element (9, 102), configure the first network element (101) or respectively the second network element (9, 102) to pass the packet of the stream of packets to the packet stream monitor (8).

3. The network entity according to claim 2, wherein the software network controller (2) is further configured to :
- determine a monitoring bit rate, wherein the monitoring bit rate is the bit rate of the stream of packets received by the packet stream monitor (8),
- compare the monitoring bit rate to the generating bit rate.

4. The network entity (1) according to claim 1, wherein the first network element is an upstream packet switch (101), the second network element is a downstream packet switch (102) connected to the upstream packet switch (101) by a network link (11) or a network (10), wherein the network element under supervision is the network link (11) or the network (10), wherein the stream of packets is passed through the network link (11) or the network (10) the determined number N of times.

5. The network entity (1) according to claim 1, the second network element is a high-speed loopback plug (9) connected to a port of the upstream packet switch (101), wherein the high-speed loopback plug (9) is configured to loop back a packet stream received from a port of the upstream packet switch (101) to the port of the upstream packet switch (101), wherein the network element under supervision is the upstream packet switch (101).

6. The network entity (1) according to claim 1, the software network controller (2) is further connected to the second network element (102), and wherein the software network controller (2) is further configured to control the second network element (102) in order that the second network element (102) is configured to pass back the stream of packets to the first network element (101), until a packet of the stream of packets has been passed a determined number N of times from the first network element (101) to the second network element (102).

7. The network entity (1) according to claim 1, wherein the software network controller (2) is further configured to, prior to control the first network element (101) to pass the stream of packets to the second network element (102), control the first network element (101) to set a loop counter in header tags of the packets of the stream of packets.

8. The network entity (1) according to claim 7, wherein the loop counter comprises a triggering limit, which is a function of the number N.

9. The network entity according to claim 1, wherein the software network controller (2) is further configured to control the first network element (101) to replicate the packet stream into a replicated packet stream, and to send the replicated packet stream to the network element under supervision.

10. A method for providing an aggregated bit rate packet stream in a network element under supervision (11, 101) in a software defined network, SDN, the method comprising:
- generating by a network entity (1) a stream of packets having a generating bit rate,
- sending by the network entity (1) the stream of packets to a first network element (101),
- configuring by the network entity (1) the first network element to iteratively pass the stream of packets to a second network element (102), the second network element (102) being configured to loop back the stream of packets to the first network element, until a packet of the stream of packets has been looped a determined number N of times from the first network element to the second network element.

11. The method according to claim 10, further comprising:
- receiving streams of packets from the first network element (101) or respectively the second network element (9, 102), and
- as a response to determining that a packet of the stream of packets has been looped a determined number N of times from the first network element (101) to the second network element (9, 102), passing the packet of the stream of packets to the packet stream monitor (8).

12. The method according to claim 11, further comprising:
- determining a monitoring bit rate, wherein the monitoring bit rate is the bit rate of the stream of packets received by the packet stream monitor (8),
- comparing the monitoring bit rate to the generating bit rate.

13. The method according to claim 10, further comprising:
- passing back the stream of packets to the first network element (101), until a packet of the stream of packets has been passed a determined number N of times from the first network element (101) to the second network element (102).

14. The method according to claim 10, further comprising:
- setting a loop counter in header tags of the packets of the stream of packets.

15. The method according to claim 10, further comprising:
- replicating the packet stream into a replicated packet stream, and to send the replicated packet stream to the network element under supervision.

## Patentansprüche

1. Netzwerkeinheit (1) zur Bereitstellung eines aggregierten Bitratenpaketstroms in einem unter Aufsicht stehenden Netzwerkelement (11, 101) in einem softwaredefinierten Netzwerk, SDN, wobei die Netzwerkeinheit (1) dazu bestimmt ist, mit einem ersten Netzwerkelement (101) verbunden zu werden, die Netzwerkeinheit (1) umfassend:
einen Paketstromgenerator (3), der konfiguriert ist, um:
- einen Strom von Paketen zu erzeugen, der eine Erzeugungsbitrate aufweist,
- den Strom von Paketen an das erste Netzwerkelement (101) zu senden,
eine Software-Netzwerksteuerung (2), die konfiguriert ist, um:
- das erste Netzwerkelement (101) zu konfigurieren, um den Strom von Paketen *iterativ* an ein zweites Netzwerkelement weiterzuleiten,
wobei das zweite Netzwerkelement (9, 102) konfiguriert ist, um den Strom von Paketen zu dem ersten Netzwerkelement (101) zurückzuführen, bis ein Paket des Stroms von Paketen eine bestimmte Anzahl N von Malen von dem ersten Netzwerkelement (101) zu dem zweiten Netzwerkelement (9, 102) zurückgeführt wurde.

2. Netzwerkeinheit (1) nach Anspruch 1, wobei die Netzwerkeinheit ferner umfasst:
einen Paketstrommonitor (8), der konfiguriert ist, um Ströme von Paketen von dem ersten Netzwerkelement (101) bzw. dem zweiten Netzwerkelement (9, 102) zu empfangen, wobei die Software-Netzwerksteuerung (2) ferner konfiguriert ist, um:
- in Reaktion auf das Bestimmen, dass ein Paket des Stroms von Paketen eine bestimmte Anzahl N von Malen von dem ersten Netzwerkelement (101) zu dem zweiten Netzwerkelement (9, 102) zurückgeführt wurde, das erste Netzwerkelement (101) bzw. das zweite Netzwerkelement (9, 102) zu konfigurieren, um das Paket des Stroms von Paketen an den Paketstrommonitor (8) weiterzuleiten.

3. Netzwerkeinheit nach Anspruch 2, wobei die Software-Netzwerksteuerung (2) ferner konfiguriert ist, um:
- eine Überwachungsbitrate zu bestimmen, wobei die Überwachungsbitrate die Bitrate des von dem Paketstrommonitor (8) empfangenen Stroms von Paketen ist;
- die Überwachungsbitrate mit der Erzeugungsbitrate zu vergleichen.

4. Netzwerkeinheit (1) nach Anspruch 1, wobei das erste Netzwerkelement eine Upstream-Paketvermittlung (101) ist, das zweite Netzwerkelement eine Downstream-Paketvermittlung (102) ist, die durch eine Netzwerkverbindung (11) oder ein Netzwerk (10) mit der Upstream-Paketvermittlung (101) verbunden ist, wobei das unter Aufsicht stehende Netzwerkelement die Netzwerkverbindung (11) oder das Netzwerk (10) ist, wobei der Strom von Paketen die bestimmte Anzahl N von Malen durch die Netzwerkverbindung (11) oder das Netzwerk (10) geleitet wird.

5. Netzwerkeinheit (1) nach Anspruch 1, wobei das zweite Netzwerkelement ein Hochgeschwindigkeits-Loopback-Stecker (9) ist, der mit einem Anschluss der Upstream-Paketvermittlung (101) verbunden ist, wobei der Hochgeschwindigkeits-Loopback-Stecker (9) konfiguriert ist, um einen von einem Anschluss der Upstream-Paketvermittlung (101) empfangenen Strom von Paketen zu dem Anschluss der Upstream-Paketvermittlung (101) zurückzuführen, wobei das unter Aufsicht stehende Netzwerkelement die Upstream-Paketvermittlung (101) ist.

6. Netzwerkeinheit (1) nach Anspruch 1, wobei die Software-Netzwerksteuerung (2) ferner mit dem zweiten Netzwerkelement (102) verbunden ist und wobei die Software-Netzwerksteuerung (2) ferner konfiguriert ist, um das zweite Netzwerkelement (102) zu steuern, sodass das zweite Netzwerkelement (102) konfiguriert wird, um den Strom von Paketen an das erste Netzwerkelement (101) zurückzugeben, bis ein Paket des Stroms von Paketen eine bestimmte Anzahl N von Malen von dem ersten Netzwerkelement (101) an das zweite Netzwerkelement (102) weitergeleitet wurde.

7. Netzwerkeinheit (1) nach Anspruch 1, wobei die Software-Netzwerksteuerung (2) ferner konfiguriert ist, um vor dem Steuern des ersten Netzwerkelements (101) zur Weiterleitung des Stroms von Paketen an das zweite Netzwerkelement (102) das erste Netzwerkelement (101) zu steuern, um einen Schleifenzähler in Kopfzeilentags der Pakete des Stroms von Paketen zu setzen.

8. Netzwerkeinheit (1) nach Anspruch 7, wobei der Schleifenzähler ein Limit für das Auslösen umfasst, das eine Funktion der Zahl N ist.

9. Netzwerkeinheit nach Anspruch 1, wobei die Software-Netzwerksteuerung (2) ferner konfiguriert ist, um das erste Netzwerkelement (101) zu steuern, um den Strom von Paketen in einen replizierten Strom von Paketen zu replizieren, und um den replizierten Strom von Paketen an das unter Aufsicht stehende Netzwerkelement zu senden.

10. Verfahren zur Bereitstellung eines aggregierten Bitratenpaketstroms in einem unter Aufsicht stehenden Netzwerkelement (11, 101) in einem softwaredefinierten Netzwerk, SDN, das Verfahren umfassend:
- Erzeugen, durch eine Netzwerkeinheit (1), eines Stroms von Paketen, der eine Erzeugungsbitrate aufweist,
- Senden, durch die Netzwerkeinheit (1), des Stroms von Paketen an ein erstes Netzwerkelement (101),
- Konfigurieren, durch die Netzwerkeinheit (1), des ersten Netzwerkelements, um den Strom von Paketen iterativ an ein zweites Netzwerkelement (102) weiterzuleiten, wobei das zweite Netzwerkelement (102) konfiguriert ist, um den Strom von Paketen zu dem ersten Netzwerkelement zurückzuführen, bis ein Paket des Stroms von Paketen eine bestimmte Anzahl N von Malen von dem ersten Netzwerkelement zu dem zweiten Netzwerkelement zurückgeführt wurde.

11. Verfahren nach Anspruch 10, ferner umfassend:
- Empfangen von Strömen von Paketen von dem ersten Netzwerkelement (101) bzw. dem zweiten Netzwerkelement (9, 102), und
- in Reaktion auf das Bestimmen, dass ein Paket des Stroms von Paketen eine bestimmte Anzahl N von Malen von dem ersten Netzwerkelement (101) zu dem zweiten Netzwerkelement (9, 102) zurückgeführt wurde, Weiterleiten des Pakets des Stroms von Paketen an den Paketstrommonitor (8).

12. Verfahren nach Anspruch 11, ferner umfassend:
- Bestimmen einer Überwachungsbitrate, wobei die Überwachungsbitrate die Bitrate des von dem Paketstrommonitor (8) empfangenen Stroms von Paketen ist,
- Vergleichen der Überwachungsbitrate mit der Erzeugungsbitrate.

13. Verfahren nach Anspruch 10, ferner umfassend:
- Zurückgeben des Stroms von Paketen an das erste Netzwerkelement (101), bis ein Paket des Stroms von Paketen eine bestimmte Anzahl N von Malen von dem ersten Netzwerkelement (101) an das zweite Netzwerkelement (102) weitergeleitet wurde.

14. Verfahren nach Anspruch 10, ferner umfassend:
- Setzen eines Schleifenzählers in Kopfzeilentags der Pakete des Stroms von Paketen.

15. Verfahren nach Anspruch 10, ferner umfassend:
Replizieren des Stroms von Paketen in einen replizierten Strom von Paketen, und um den replizierten Strom von Paketen an das unter Aufsicht stehende Netzwerkelement zu senden.

## Revendications

1. Entité de réseau (1) pour fournir un flux de paquets à débit binaire cumulé dans un élément de réseau sous surveillance (11, 101) dans un réseau défini par logiciel, SDN, l'entité de réseau (1) étant destinée à être connectée à un premier élément de réseau (101), l'entité de réseau (1) comprenant :
un générateur de flux de paquets (3) configuré
- pour générer un flux de paquets ayant un débit binaire de génération,
- pour envoyer le flux de paquets au premier élément de réseau (101),
un dispositif de commande de réseau par logiciel (2) configuré
- pour configurer le premier élément de réseau (101) pour passer *de manière itérative* le flux de paquets à un second élément de réseau,
le second élément de réseau (9, 102) étant configuré pour faire revenir en boucle le flux de paquets au premier élément de réseau (101), jusqu'à ce qu'un paquet du flux de paquets ait été passé en boucle un nombre déterminé N de fois du premier élément de réseau (101) au second élément de réseau (9, 102).

2. Entité de réseau (1) selon la revendication 1, dans laquelle l'entité de réseau comprend en outre :
un dispositif de surveillance de flux de paquets (8) configuré pour recevoir des flux de paquets en provenance du premier élément de réseau (101) ou respectivement du second élément de réseau (9, 102), dans laquelle le dispositif de commande de réseau par logiciel (2) est en outre configuré
- à la suite de la détermination qu'un paquet du flux de paquets a été passé en boucle un nombre déterminé N de fois du premier élément de réseau (101) au second élément de réseau (9, 102), pour configurer le premier élément de réseau (101) ou respectivement le second élément de réseau (9, 102) pour passer le paquet du flux de paquets au dispositif de surveillance de flux de paquets (8).

3. Entité de réseau (1) selon la revendication 2, dans laquelle le dispositif de commande de réseau par logiciel (2) est en outre configuré :
- pour déterminer un débit binaire de surveillance, dans laquelle le débit binaire de surveillance est le débit binaire du flux de paquets reçu par le dispositif de surveillance de flux de paquets (8),
- pour comparer le débit binaire de surveillance avec le débit binaire de génération.

4. Entité de réseau (1) selon la revendication 1, dans laquelle le premier élément de réseau est un commutateur de paquet amont (101), le second élément de réseau est un commutateur de paquet aval (102) connecté au commutateur de paquet amont (101) au moyen d'une liaison de réseau (11) ou d'un réseau (10), dans laquelle l'élément de réseau sous surveillance est la liaison de réseau (11) ou le réseau (10), dans laquelle le flux de paquets est passé par le biais de la liaison de réseau (11) ou du réseau (10) le nombre déterminé N de fois.

5. Entité de réseau (1) selon la revendication 1, dans laquelle le second élément de réseau est une fiche de bouclage à vitesse élevée (9) raccordée à un port du commutateur de paquet amont (101), dans laquelle la fiche de bouclage à vitesse élevée (9) est configurée pour faire revenir en boucle un flux de paquets reçu d'un port du commutateur de paquet amont (101) au port du commutateur de paquet amont (101), dans laquelle l'élément de réseau sous surveillance est le commutateur de paquet amont (101).

6. Entité de réseau (1) selon la revendication 1, dans laquelle le dispositif de commande de réseau par logiciel (2) est en outre connecté au second élément de réseau (102) et dans laquelle le dispositif de commande de réseau par logiciel (2) est en outre configuré pour commander le second élément de réseau (102) afin que le second élément de réseau (102) soit configuré pour rendre le flux de paquets au premier élément de réseau (101) jusqu'à ce qu'un paquet du flux de paquets ait été passé un nombre déterminé N de fois du premier élément de réseau (101) au second élément de réseau (9, 102).

7. Entité de réseau (1) selon la revendication 1, dans laquelle le dispositif de commande de réseau par logiciel (2) est en outre configuré, avant de commander le premier élément de réseau (101) pour passer le flux de paquets au second élément de réseau (102), pour commander le premier élément de réseau (101) pour régler un compteur de boucle dans des étiquettes d'en-tête des paquets du flux de paquets.

8. Entité de réseau (1) selon la revendication 7, dans laquelle le compteur de boucle comprend une limite de déclenchement qui est une fonction du nombre N.

9. Entité de réseau (1) selon la revendication 1, dans laquelle le dispositif de commande de réseau par logiciel (2) est en outre configuré pour commander le premier élément de réseau (101) pour recopier le flux de paquets dans un flux de paquets recopié et pour envoyer le flux de paquets recopié à l'élément de réseau sous surveillance.

10. Procédé pour fournir un flux de paquets à débit binaire cumulé dans un élément de réseau sous surveillance (11, 101) dans un réseau défini par logiciel, SDN, le procédé comprenant :
- la génération, par une entité de réseau (1), d'un flux de paquets ayant un débit binaire de génération,
- l'envoi, par l'entité de réseau (1), du flux de paquets à un premier élément de réseau (101),
- la configuration, par l'entité de réseau (1), du premier élément de réseau pour passer de manière itérative le flux de paquets à un second élément de réseau (102),
le second élément de réseau (102) étant configuré pour faire revenir en boucle le flux de paquets au premier élément de réseau, jusqu'à ce qu'un paquet du flux de paquets ait été passé en boucle un nombre déterminé N de fois du premier élément de réseau au second élément de réseau.

11. Procédé selon la revendication 10, comprenant en outre :
- la réception de flux de paquets en provenance du premier élément de réseau (101) ou respectivement du second élément de réseau (9, 102), et
- à la suite de la détermination qu'un paquet du flux de paquets a été passé en boucle un nombre déterminé N de fois du premier élément de réseau (101) au second élément de réseau (9, 102), le passage du paquet du flux de paquets au dispositif de surveillance de flux de paquets (8).

12. Procédé selon la revendication 11, comprenant en outre :
- la détermination d'un débit binaire de surveillance, dans lequel le débit binaire de surveillance est le débit binaire du flux de paquets reçu par le dispositif de surveillance de flux de paquets (8),
- la comparaison du débit binaire de surveillance avec le débit binaire de génération.

13. Procédé selon la revendication 10, comprenant en outre :
- le fait de rendre le flux de paquets au premier élément de réseau (101) jusqu'à ce qu'un paquet du flux de paquets ait été passé un nombre déterminé N de fois du premier élément de réseau (101) au second élément de réseau (102).

14. Procédé selon la revendication 10, comprenant en outre :
- le réglage d'un compteur de boucle dans des étiquettes d'en-tête des paquets du flux de paquets.

15. Procédé selon la revendication 10, comprenant en outre :
- le recopiage du flux de paquets dans un flux de paquets recopié et l'envoi du flux de paquets recopié à l'élément de réseau sous surveillance.
